# EUROPEAN PATENT SPECIFICATION

(11) **EP 2 080 578 B1**
(45) Date of publication and mention of the grant of the patent: **21.09.2011**
(21) Application number: 09150685.7
(22) Date of filing: 15.01.2009
(51) Int. Cl.: B23K 20/12

(54) **Linear friction welded blisk and method of fabrication**
Linearer, reibgeschweisster Integralrotor (Blisk) und Herstellungsverfahren
Disque aubagé monobloc soudée par friction linéaire et son procédé de fabrication

(30) Priority: 21.01.2008 US 17226
(43) Date of publication of application: 22.07.2009
(73) Proprietor: Honeywell International Inc., Morristown, NJ 07962 (US)
(72) Inventor: Chung, Vincent, P.O. Box 2245 Morristown, NJ 07962-2245 (US); Swanson, Jr., Howard W., P.O. Box 2245 Morristown, NJ 07962-2245 (US); Bazzell, Brad, P.O. Box 2245 Morristown, NJ 07962-2245 (US); Berry, Brian, P.O. Box 2245 Morristown, NJ 07962-2245 (US); Nutter, Clayton, P.O. Box 2245 Morristown, NJ 07962-2245 (US); Ryan, Daniel, P.O. Box 2245 Morristown, NJ 07962-2245 (US)
(74) Representative: Buckley, Guy Julian

(56) References cited:
- EP-A- 0 850 718
- EP-A- 1 516 690
- EP-A- 1 604 770
- WO-A-2008/017800

## Description

The present invention relates to welding. More particularly the invention is related to linear friction welding (LFW) techniques used with complex machinery geometries such as turbine engine blisks. The invention relates to the joining of airfoil blades to a disk, such as a blisk hub, during the manufacture and repair of turbine engine blisks.

### BACKGROUND

Turbine engines are used as the primary power source for many types of aircrafts. The engines are also auxiliary power sources that drive air compressors, hydraulic pumps, and industrial gas turbine (IGT) power generation. Further, the power from turbine engines is used for stationary power supplies such as backup electrical generators for hospitals and the like.

Most turbine engines generally follow the same basic power generation procedure. Compressed air generated by axial and/or radial compressors is mixed with fuel and burned, and the expanding hot combustion gases are directed against stationary turbine vanes in the engine. The varies turn the high velocity gas flow partially sideways to impinge on the turbine blades mounted on a rotatable turbine disk. The force of the impinging gas causes the turbine disk to spin at high speed. Jet propulsion engines use the power created by the rotating turbine disk to draw more air into the engine and the high velocity combustion gas is passed out of the gas turbine aft end to create forward thrust. Other engines use this power to turn one or more propellers, fans, electrical generators, or other devices.

Fan, low and high pressure compressor (LPC/HPC) components are primary components in the cold section for any turbine engine and typically include complex shapes. Blisks for example have airfoils, or blades, with surface curvature that extends in three dimensions. Blisk is the term used in the aeronautical field for a unitary piece with a rotor and airfoils. A blisk, for example, contains a series of airfoils that radiate out from a central hub. Blisks are being increasingly specified in modem turbine engine design as a method to achieve high compression in relatively short lateral spaces. These components are typically fabricated and repaired by joining separately formed blades to a disc or hub. It is desirable to optimize the design of these components during the build process. In addition, the fan/LPC/HPC components may be subject to stress loadings during turbine engine operation, and may also be impacted by foreign objects such as sand, dirt, and other such debris. Accordingly, the fan/LPC/HPC components can degrade over time due to wear, erosion and foreign object impact. Sometimes LPC/HPC components are degraded to a point at which they must be repaired or replaced, which that result in significant operating expense and time out of service.

There are several traditional methods for fabricating and repairing worn turbine engine components such as blisks, and each method has some limitations in terms of success, (see EP-A- 1 516 690). Typically, friction welding is used to join the blades to the disc or hub. Frictional welding is achieved by moving either one or both of the blades and disc relative to one another with sufficient force to generate frictional heat, thereby joining the blade to the disc. Many times a stub is formed upstanding about a periphery of the disc for attachment of the blade. The joining stub typically follows the axial curve of the disc or hub and includes a joining surface that also follows the axial curve of the disc or hub. In other instances, friction welding is used to join the blades to the disc by providing a slot that follows the axial contour of the disk as a joining surface.

The geometry of turbine engine blisks makes them particularly vulnerable to inadequate joining of the blades and disc due to insufficient stiffness that is achieved during the above-described welding processes. Accordingly there is a need for a blisk design, and more particularly a linear friction welded blisk and method of fabricating the blisk whereby sufficient welding stiffness is achieved with optimization of the joining stub. It is desired that the joining stub, and method of fabricating or repairing the blisk, be suitable for use with automated welding systems. The present invention addresses one or more of these needs.

### BRIEF SUMMARY

The present invention provides a blisk as defined in claim 1.

The blisk may include the features of any one or more of dependent claims 2 to 5. The present invention also provides a method as defined in claim 6.

The present invention provides for a linear friction welded blisk and a method of fabrication.

Other independent features and advantages of the blisk design and method of fabrication, including the design of the joining stub for the welding of blades to a rotor, will become apparent from the following detailed description, taken in conjunction with the accompanying drawings which illustrate, by way of example, the principles of the invention.

### BRIEF DESCRIPTION OF THE DRAWINGS

FIG. 1 is a perspective view of a gas turbine engine blisk such as may be used with the present invention;
FIG. 2 is a perspective view of a joining stub, blade, and hub according to an embodiment of the invention;
FIG. 3 is a side view of a blade joining stub, airfoil blade, and blisk hub according to an example not covered by the invention;
FIG. 4 is a side view of a blade joining stub, airfoil blade, and blisk hub according to another embodiment of the invention; and
FIG. 5 is a top view of a blisk hub and joining stub according to an embodiment of the invention.

### DETAILED DESCRIPTION OF A PREFERRED EMBODIMENT

The following detailed description of the invention is merely exemplary in nature and is not intended to limit the invention or the application and uses of the invention. Furthermore, there is no intention to be bound by any theory presented in the preceding background of the invention or the following detailed description of the invention. Reference will now be made in detail to exemplary embodiments of the invention, examples of which are illustrated in the accompanying drawings. Wherever possible, the same reference numbers will be used throughout the drawings to refer to the same or like parts.

It has now been discovered that an improved turbine engine blisk design fabricated using linear friction welding (LFW) can be achieved through the use of a blade joining stub that does not follow the axial contour of the blisk hub to which the airfoil blades are attached. In overview, the blade joining stub is fabricated to include a blade weld surface, at a joining zone, that does not follow the axial contour of the blisk hub to which the airfoil blade is being attached. Linear friction welding (LFW) is used to adjoin the two components in the joining zone. The technique significantly reduces the complexity required in the linear friction welding machine design as well as tooling design.

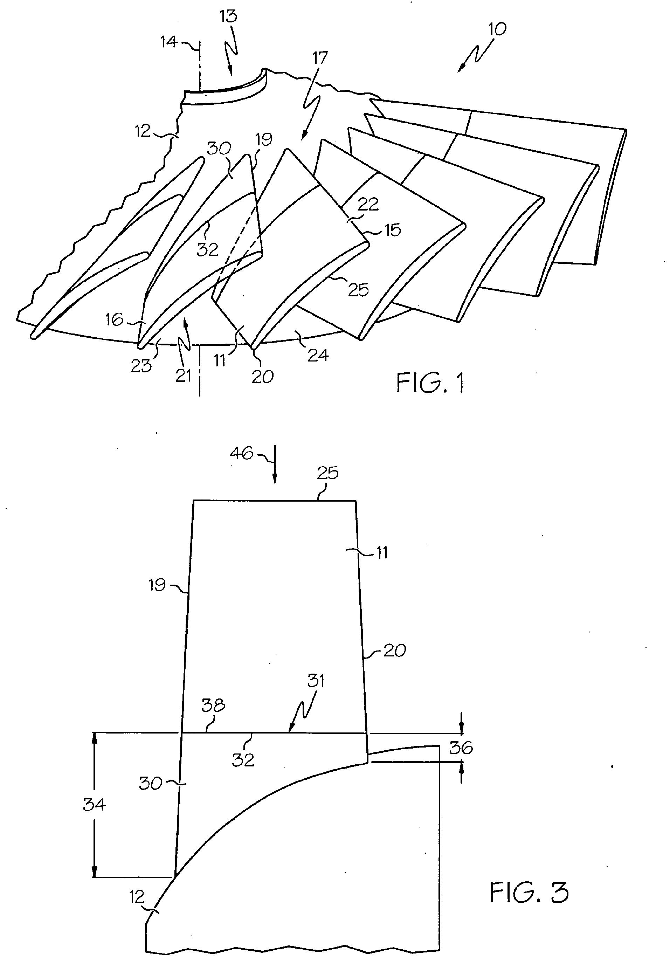

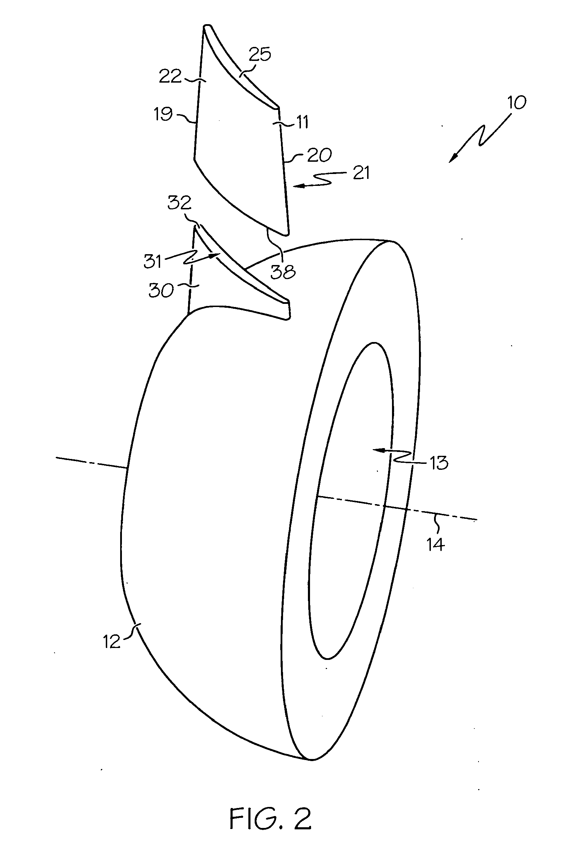

Referring now to FIGs. 1-5, wherein figure 3 only shows a background example, there is shown a representation of a typical blisk 10 suitable for use with the present invention. The blisk 10 includes a plurality of airfoils or airfoil blades 11 positioned in adjacent circumferential position along a rotor disk or a blisk hub 12. The blisk 10 has a generally radial structure and, as shown in FIGs. 1 and 2, a central bore area 13. The blisk 10 has a generally tapered periphery, and more particularly the diameter of the blisk hub 12 about an imaginary central axis 14 increases in a downstream direction (discussed presently), in most designs, in a nonlinear fashion. The blisk hub 12 defines an axial contour. In some designs, the blisk 10 is fabricated as a unitary piece with an axle and would not have an open bore area though it would have the corresponding bore region. The central bore area 13 is aligned along the imaginary central axis 14 that runs through the central bore area 13 in an axial direction. In operation the blisk 10 is disposed on a central axle (not shown) at the central bore area 13 and rotates thereon or rotates with the axle. The plurality of airfoils or airfoil blades 11 extend from the blisk hub 12 in an outwardly radial and axial direction. The blisk 10 further defines an upstream position 15 and a downstream position 16. The upstream position 15 and the downstream position 16 correspond to the fluid path flow through and across the blisk 10. Fluid, and more specifically air, first enters the blisk 10 at the upstream position 15. As air passes the blisk 10 it exits in the downstream position 16. Air passing across the blisk 10 is pressurized such that the air exiting blisk 10 is at a higher temperature and pressure relative to the air entering the blisk 10. The direction of the air flow 17 moves across the face of the blisk 10, the face being that portion of the blisk 10 which is exposed to air flow. In operation, the blisk 10 may be disposed within a housing or structure (not shown) which, by close proximity to the airfoil blades 11, assists in placing the air under pressure.

In the blisk configurations shown in FIGs. 1-5, the airfoil blades 11 press against air as the blisk 10 rotates and acts to compress the air. Simultaneously, air that exits the blisk 10 at the downstream position 16 is typically at a higher temperature than compared to the air entering in the upstream position 15.

Each of the plurality of airfoil blades 11 may further be described as having a cup-like structure that includes a concave face, referred to as a pressure face 21, and a convex face, referred to as a back face 22, on the reverse side of the airfoil blade 11. The pressure face 21 is that face of the airfoil blade 11 that spins into the air being compressed when the blisk 10 rotates. During operation, gases impinge on the pressure face 21 of the airfoil blade 11 thereby providing the driving force for the turbine engine. Pressure develops on the pressure face 21 while suction develops on the back face 22. This force acting on the airfoil blade 11 thereby spins the blisk hub 12. Neighboring airfoils define a valley 23 therebetween. It can also be stated that the valley 23 is bounded by neighboring airfoil blades 11. As used in this specification, the term "valley" refers to the empty space, or volume, that is defined between two neighboring airfoil blades 11 on the blisk 10. The valley surface 24 is that portion of the blisk hub 12 that lies between neighboring airfoil blades 11. Thus the valley surface 24 forms a bottom boundary of a valley 23. Similarly the pressure face 21 of the airfoil blade 11 forms a boundary of a valley, and a back face 22 forms another boundary of a valley. By the open nature of the blisk structure, there is no upper boundary on a valley 23. The airfoil blade 11 may further be described as including a leading edge 19 and a trailing edge 20, which represent the edges of the airfoil blade 11 that firstly and lastly encounter an air stream passing around it. The leading edge 19 is the generally ridge-like surface that extends in height from blisk hub 12. The leading edge 19 is subject to wear and degradation. Partly, this arises from debris and contaminants carried in the airstream. This debris impacts the leading edge 19 at high velocity thus leading to nicks, wear, and erosion, all of which impair the engine performance. The top edge 25 is also subject to wear due to both particulate erosion and rubbing against adjacent engine structures. Other portions of the airfoil blade 11, including the trailing edge 20, are subject to erosion due to the harsh environment of the engine.

A plurality of blade joining stubs 30 are positioned or formed projecting about a periphery of the blisk hub 12. The blade joining stubs 30 may be machined into the blisk hub 12 or forged into the original structure as desired. Each of the plurality of blade joining stubs 30 defines a planar weld joint surface 32 on a radially outermost face of the blade joining stub 30. The planar weld joint surface 32, or joining surface, while following the annulus curvature of the blisk hub 12 in a circumferential direction, does not follow the annulus curvature of the blisk hub 12 in an axial direction. More specifically, the planar weld joint surface 32 does not follow the curved profile of the periphery of the blisk hub 12 in the axial direction. Each of the plurality of blade joining stubs 30 are fabricated to include the substantially planar weld joint surface 32, whereby the planar weld joint surface 32 is substantially parallel to the imaginary central axis 14 of the blisk hub 12.

Each of the plurality of blade joining stubs 30 is fabricated having a low profile and extends a first dimension 34 from an upstream 19 portion of the blisk hub 12 and a second dimension 36 from a downstream 20 portion of the blisk hub 12, wherein the first dimension 34 is greater than the second dimension 36 to achieve a substantially planar weld joint surface 32 that is parallel to the imaginary central axis 14.

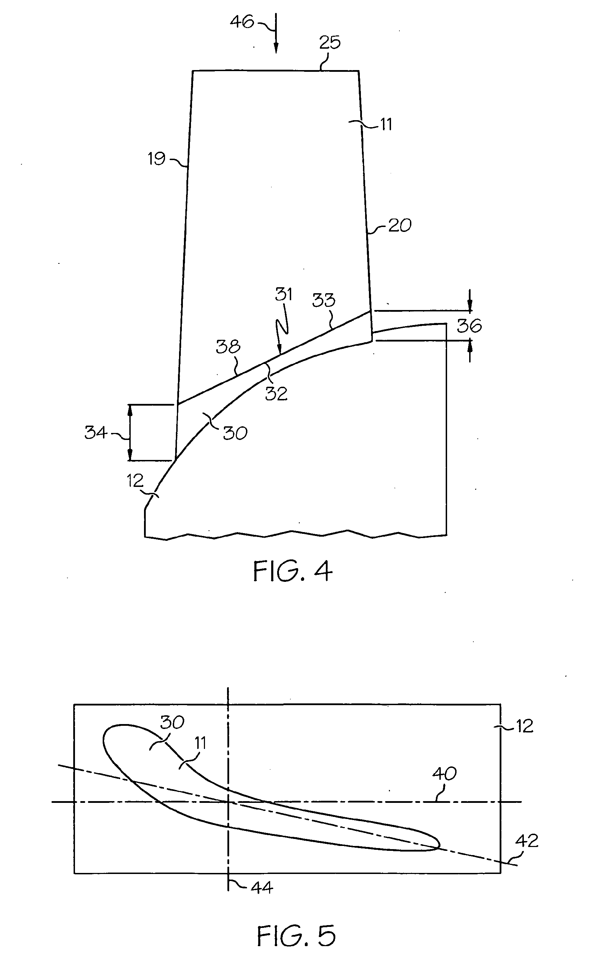

Illustrated in FIG. 4 is an embodiment in which a planar weld joint surface 33 can be tapered in a linear fashion (straight line) but similar to joint weld surface 32 of FIG. 3, does not follow the curved profile of the periphery of the blisk hub 12 in the axial direction.

The overall height of the blade joining stub 30 is defined by the minimum requirements necessary to avoid excessive heat at a joining zone 31, and damage to the airfoil blade I incurred due to movement during the linear friction welding process. Each of the blade joining stubs 30 has a complementary shape, as best illustrated in FIG. 5, at its planar weld joint surface 32 to that of the airfoil blade 11 being attached thereto. Similarly, each of the airfoil blades 11 includes a complementary blade weld surface 38 that is planar so as to follow the planar weld joint surface 32 of the blade joining stub 30 to which it will be attached.

Linear friction welding is used to join each of the plurality of airfoil blades 11 to one of the plurality of blade joining stubs 30 at the blade weld surface 38 and the planar weld joint surface 32. A single airfoil blade 11 is applied radially to a blade joining stub 30 and linear friction welding (LFW) of the airfoil blade 11 to the blade joining stub 30 is effected by applying a reciprocating motion to the airfoil blade 11 in at least one of an axial 40, chordal 42, or tangential 44 direction (FIG. 5) relative to the weld joining surfaces 32 and the blade weld surface 38 while applying a forging load 46 (FIG. 3) inwardly along the airfoil blade 11. The planar weld joining surface 32 defined by the blade joining stub 30 provides that the joining motion not be limited to a specific direction thereby reducing the complexity of the linear friction welding (LFW) machine design as well as the tooling design. In addition, as a result of the uniform planar weld joining surface 32, the required forging load 46 may potentially be smaller and thus a smaller machine may be used.

Heretofore, a blade joining stub 30 including a substantially planar weld joining surface 32 has been described for blisks found in gas turbine engines. The blade joining stub 30 provides for an increase in blade count for minimum kinetic energy released during a blade out condition, thereby further reducing system weight. The increase in blade count results because the spacing between the airfoil blades 11 at the leading edge 19 is no longer a limiting factor due to blade accessibility during the forging or repair process. In addition, the consistency of the final blade position or tolerance is improved due to overall accessibility of the leading edge 19 of the airfoil blades 11. It should be noted that the general shape and structure of a gas turbine blisk is also true of other rotary devices such as turbines found in turbochargers and turbopumps. Thus, the blade joining stub 30 as described herein may also be used with turbine engine compressors, centrifugal compressors, integrally bladed rotors, compressor blades and vanes, fan blades, and turbine blades, all in addition to blisks. The principles of the invention described herein are thus applicable to these devices as well.

While the invention has been described with reference to a preferred embodiment, it will be understood by those skilled in the art that various changes may be made and equivalents may be substituted for elements thereof without departing from the scope of the invention. In addition, many modifications may be made to adapt to a particular situation or material to the teachings of the invention without departing from the essential scope thereof. Therefore, it is intended that the invention not be limited to the particular embodiment disclosed as the best mode contemplated for carrying out this invention, but that the invention will include all embodiments falling within the scope of the appended claims.

## Claims

1. An assembly for forming a linear friction welded blisk (10) of a gas turbine engine, comprising:
a blisk hub (12) including a periphery having a curved profile and, further including a central axis (14) formed therethrough extending from an upstream position (15) of the gas turbine engine to a downstream position (16) of the gas turbine engine; and
at least one blade joining stub (30) defining a single planar weld joint surface (32) to which at least one airfoil blade (11) may be welded by linear friction welding, the at least one blade joining stub (30) formed on the periphery of the blisk hub (12), the planar weld joint surface (32) having an outermost surface that does not follow the curved profile of the periphery of the blisk hub (12) in an axial (40) direction; and **characterized in that** the planar weld joint surface (32) is tapered in a linear fashion relative to the central axis (14) of the blisk hub (12); and
wherein the at least one blade joining stub (30) extends a first dimension (34) from an upstream portion (19) of the blisk hub (12) and a second dimension (36) from a downstream portion (20) of the blisk hub (12), the first dimension (34) being greater than the second dimension (36).

2. The blisk (10) as claimed in claim 1, further including the least one airfoil blade (11) attached to the at least one blade joining stub (30) and defining a blade weld surface (38).

3. The blisk (10) as claimed in claim 2, wherein a shape of the planar weld joint surface (32) of the at least one blade joining stub (30) conforms to a shape of the blade weld surface (38).

4. The blisk (10) as claimed in claim 1, wherein the diameter of the blisk hub (12) increases about the central axis (14) in a downstream direction (16) of the gas turbine engine.

5. The blisk (10) as claimed in claim 1, wherein the planar weld joint surface (32) of the at least one blade joining stub (30) extends a height above a surface of the blisk hub (12) sufficient to avoid damage to the at least one airfoil blade (11) attached thereto due to weld heat.

6. A method of forming a linear friction welded blisk (10) of a gas turbine engine using the assembly of claim 1, the method comprising:
forming a blisk hub (12) including a periphery having a curved profile, and further including a central axis (14) formed therethrough extending from an upstream position (15) of the gas turbine engine to a downstream position (16) of the gas turbine engine;
forming at least one blade joining stub (30) on the periphery of the blisk hub (12) and defining a single planar weld joint surface (32) to which an airfoil blade (11) may be welded, wherein in axial (40) and circumferential directions of the blisk hub (12), the planar weld joint surface (32) does not follow the curved profile of the periphery of the blisk hub (12) in an axial (40) direction, and wherein the planar weld joint surface (32) of the at least one blade joining stub (30) is tapered in a linear fashion relative to the central axis of the blisk hub (12);
forming the airfoil blade (11) having an airfoil blade weld surface (38), a leading edge (19), a trailing edge (20) and a top edge (25), wherein in axial (40) and circumferential directions of the blisk hub (12), a shape of the planar weld joint surface (32) of the at least one blade joining stub (30) conforms to a shape of the airfoil blade weld surface (38); and
welding the airfoil blade weld surface (38) to the at least one blade joining stub (30) by apply a reciprocating motion to the airfoil blade (11) in multiple ones of an axial (40), a chordal (42) and a tangential (44) direction relative to the weld joining surface (32) and the blade weld surface (38) while applying a forcing load (46) inwardly along the airfoil blade (11).

## Patentansprüche

1. Anordnung zum Bilden einer geradlinigen, reibverschweißten Blisk (10) einer Gasturbinenmaschine, die umfasst:
eine Blisknabe (12), die einen Umfang mit einem gekrümmten Profil besitzt und ferner eine durch sie hindurch ausgebildete Mittelachse (14) enthält, die sich von einer stromaufseitigen Position (15) der Gasturbinenmaschine zu einer stromabseitigen Position (16) der Gasturbinenmaschine erstreckt; und
wenigstens einen Schaufelverbindungsansatz (30), der eine einzige ebene Schweißverbindungsoberfläche (32) definiert, an die wenigstens eine Flügelschaufel (11) durch geradliniges Reibschweißen geschweißt werden kann, wobei der wenigstens eine Schaufelverbindungsansatz (30) am Umfang der Blisknabe (12) ausgebildet ist und die ebene Schweißverbindungsoberfläche (32) eine äußerste Oberfläche besitzt, die nicht dem gekrümmten Profil des Umfangs der Blisknabe (12) in axialer Richtung (40) folgt; und
**dadurch gekennzeichnet, dass** sich die ebene Schweißverbindungsoberfläche (32) geradlinig in Bezug auf die Mittelachse (14) der Blisknabe (12) verjüngt; und
wobei sich der wenigstens eine Schaufelverbindungsansatz (30) von einem stromaufseitigen Abschnitt (19) der Blisknabe (12) über eine erste Abmessung (34) und von einem stromabseitigen Abschnitt (20) der Blisknabe (12) über eine zweite Abmessung (36) erstreckt, wobei die erste Abmessung (34) größer ist als die zweite Abmessung (36).

2. Blisk (10) nach Anspruch 1, die ferner die wenigstens eine Flügelschaufel (11) aufweist, die an dem wenigstens einen Schaufelverbindungsansatz (30) befestigt ist und eine Schaufelschweißoberfläche (38) definiert.

3. Blisk (10) nach Anspruch 2, wobei eine Form der ebenen Schweißverbindungsoberfläche (32) des wenigstens einen Schaufelverbindungsansatzes (30) mit einer Form der Schaufelschweißoberfläche (38) übereinstimmt.

4. Blisk (10) nach Anspruch 1, wobei der Durchmesser der Blisknabe (12) um die Mittelachse (14) in Stromabwärtsrichtung (16) der Gasturbinenmaschine zunimmt.

5. Blisk (10) nach Anspruch 1, wobei sich die ebene Schweißverbindungsoberfläche (32) des wenigstens einen Schaufelverbindungsansatzes (30) um eine Höhe über eine Oberfläche der Blisknabe (12) erstreckt, die ausreicht, um eine Beschädigung an der daran befestigten wenigstens einen Flügelschaufel (11) aufgrund der Schweißwärme zu vermeiden.

6. Verfahren zum Formen einer geradlinigen reibverschweißten Blisk (10) einer Gasturbinenmaschine unter Verwerdung der Anordnung nach Anspruch 1, wobei das Verfahren umfasst:
Bilden einer Blisknabe (12), die einen Umfang mit einem gekrümmten Profil aufweiset und ferner eine Mittelachse (14) aufweist, die durch sie hindurch ausgebildet ist und sich von einer stromaufseitigen Position (15) der Gasturbinenmaschine zu einer stromabseitigen Position (16) der Gasturbinenmaschine erstreckt;
Bilden wenigstens eines Schaufelverbindungsansatzes (30) am Umfang der Blisknabe (12) und Definieren einer einzigen ebenen Schweißverbindungsoberfläche (32), mit der eine Flügelschaufel (11) verschweißt werden kann, wobei in axialer Richtung (40) und in Umfangsrichtung der Blisknabe (12) die ebene Schweißverbindungsoberfläche (32) dem gekrümmten Profil des Umfangs der Blisknabe (12) in axialer Richtung (40) nicht folgt und wobei die ebene Schweißverbindungsoberfläche (32) des wenigstens einen Schaufelverbindungsansatzes (30) in Bezug auf die Mittelachse der Blisknabe (12) geradlinig konisch zuläuft;
Bilden der Flügelschaufel (11), die eine Flügelschaufel-Schweißoberfläche (38), eine Vorderkante (19), eine Hinterkante (20) und eine Oberkante (25) besitzt, wobei in axialer Richtung (40) und in Umfangsrichtung der Blisknabe (12) eine Form der ebenen Schweißverbindungsoberfläche (32) des wenigstens einen Schaufelverbindungsansatzes (30) mit einer Form der Flügelschaufel-Schweißoberfläche (38) übereinstimmt; und
Verschweißen der Flügelschaufel-Schweißoberfläche (38) mit dem wenigstens einen Schaufelverbindungsansatz (30) durch Anwenden einer hin und her gehenden Bewegung auf die Flügelschaufel (11) in mehreren Richtungen einer axialen Richtung (40), einer Sehnenrichtung (42) und einer tangentialen Richtung (44) relativ zu der Schweißverbindungsoberfläche (32) und der Schaufelschweißoberfläche (38), während eine Druckkraft (46) einwärts längs der Flügelschaufel (11) ausgeübt wird.

## Revendications

1. Ensemble pour former un rotor aubagé (10) soudé par friction linéaire pour un moteur de turbine à gaz, comprenant :
un moyeu de rotor aubagé (12) comportant une périphérie ayant un profil courbe, et comportant en outre un axe central (14) formé à travers lui et s'étendant depuis une position amont (15) du moteur de turbine à gaz jusqu'à une position aval (16) du moteur de turbine à gaz ; et
au moins un embout de connexion d'aube (30) définissant une surface de joint de soudure plane unique (32) à laquelle au moins une aube de surface portante (11) peut être soudée par soudage par friction linéaire, l'au moins un embout de connexion d'aube (30) étant formé sur la périphérie du moyeu de rotor aubagé (12), la surface de joint de soudure plane (32) ayant une surface la plus extérieure qui ne suit pas le profil courbe de la périphérie du moyeu de rotor aubagé (12) dans une direction axiale (40) ; et
**caractérisé en ce que** la surface de joint de soudure plane (32) est effilée de manière linéaire par rapport à l'axe central (14) du moyeu de rotor aubagé (12) ; et
l'au moins un embout de connexion d'aube (30) s'étendant sur une première dimension (34) depuis une portion amont (19) du moyeu de rotor aubagé (12) et sur une deuxième dimension (36) depuis une portion aval (20) du moyeu de rotor aubagé (12), la première dimension (34) étant supérieure à la deuxième dimension (36).

2. Rotor aubagé (10) selon la revendication 1, comportant en outre l'au moins une aube de surface portante (11) attachée à l'au moins un embout de connexion d'aube (30) et définissant une surface de soudage d'aube (38).

3. Rotor aubagé (10) selon la revendication 2, dans lequel une forme de la surface de joint de soudure plane (32) de l'au moins un embout de connexion d'aube (30) correspond à une forme de la surface de soudage d'aube (38).

4. Rotor aubagé (10) selon la revendication 1, dans lequel le diamètre du moyeu du rotor aubagé (12) augmente autour de l'axe central (14) dans une direction aval (16) du moteur de turbine à gaz.

5. Rotor aubagé (10) selon la revendication 1, dans lequel la surface de joint de soudure plane (32) de l'au moins un embout de connexion d'aube (30) s'étend à une hauteur au-dessus de la surface du moyeu de rotor aubagé (12) qui est suffisante pour éviter un endommagement dû à la chaleur de soudage de l'au moins une aube de surface portante (11) attachée à celle-ci.

6. Procédé pour former un rotor aubagé (10) soudé par friction linéaire pour un moteur de turbine à gaz utilisant l'ensemble de la revendication 1, le procédé comprenant les étapes consistant à :
former un moyeu de rotor aubagé (12) comportant une périphérie ayant un profil courbe, et comportant en outre un axe central (14) formé à travers lui et s'étendant depuis une position amont (15) du moteur de turbine à gaz jusqu'à une position aval (16) du moteur de turbine à gaz ;
former au moins un embout de connexion d'aube (30) sur la périphérie du moyeu de rotor aubagé (12) et définir une surface de joint de soudure plane unique (32) à laquelle une aube de surface portante (11) peut être soudée, la surface de joint de soudure plane (32), dans les directions axiale (40) et circonférentielle du moyeu de rotor aubagé (12), ne suivant pas le profil courbe de la périphérie du moyeu de rotor aubagé (12) dans une direction axiale (40), et la surface de joint de soudure plane (32) de l'au moins un embout de connexion d'aube (30) étant effilée de manière linéaire par rapport à l'axe central (14) du moyeu de rotor aubagé (12) ;
former l'aube de surface portante (11) ayant une surface de soudage d'aube de surface portante (38), un bord avant (19), un bord arrière (20) et un bord supérieur (25), une forme de la surface de joint de soudure plane (32) de l'au moins un embout de connexion d'aube (30) correspondant à une forme de la surface de soudage d'aube de surface portante (38) dans les directions axiale (40) et circonférentielle du moyeu de rotor aubagé (12) ; et
souder la surface de soudage d'aube de surface portante (38) à l'au moins un embout de connexion d'aube (30) en appliquant un mouvement alternatif à l'aube de surface portante (11) dans des directions multiples parmi des directions axiale (40), sur la corde (42) et tangentielle (44) par rapport à la surface de joint de soudure (32) et à la surface de soudure d'aube (38) tout en appliquant une charge de forçage (46) vers l'intérieur le long de l'aube de surface portante (11).
